# FASCICULE DE BREVET EUROPEEN

(11) **EP 1 619 073 B1**
(45) Date de publication et mention de la délivrance du brevet: **27.08.2008**
(21) Numéro de dépôt: 05106769.2
(22) Date de dépôt: 22.07.2005
(51) Int. Cl.: B60P 1/32, F41A 23/26

(54) **Dispositif de bras articulé à plusieurs mouvements notamment pour l'aide à la manutention**
Armmechanismus, insbesondere zur Handhabung, mit einer translatorischen Bewegung gefolgt von einer Schwenkbewegung
Arm mechanism, especially for handling, with a translatory motion followed by a rotary motion

(30) Priorité: 23.07.2004 FR 0408192
(43) Date de publication de la demande: 25.01.2006
(73) Titulaire: TDA ARMEMENTS S.A.S., 45240 La Ferté Saint-Aubin (FR)
(72) Inventeur: Poulard, Eric Thales, 94117 CX Arcueil (FR); Beaujard, André Thales, 94117 CX Arcueil (FR); Cohe, Patrick Thales, 94117 CX Arcueil (FR)
(74) Mandataire: Lucas, Laurent Jacques

(56) Documents cités:
- DE-B- 1 100 482
- US-A- 3 630 571
- US-A- 4 943 118

## Description

La présente invention concerne un dispositif à bras articulé à plusieurs mouvements. Elle s'applique notamment pour la manutention d'objets selon un mouvement de translation et un mouvement de rotation.

Les dispositifs d'aide à la manutention à bras articulé sont notamment utilisés pour le déplacement, le chargement ou le déchargement de matériels lourds ou encombrant. De tels dispositifs sont par exemple connus des documents DE-B-1100482, US-A-4 943 118 et US-A-3 630 571, qui concernent le chargement et déchargement de bennes. Il est connu de réaliser des bras articulés à plusieurs mouvements, par exemple en translation et en rotation. Ces bras sont réalisés en utilisant un auxiliaire moteur pour chaque mouvement, ce qui nécessite notamment un automate de commande et des distributeurs multivoies. Ce sont donc des systèmes relativement complexes et coûteux. A titre d'exemple, on peut citer les engins mécaniques de type pelleteuse ou grue.
La complexité de ces systèmes les rend par ailleurs peu rapide et éventuellement peu sûrs. Ils sont aussi peu simples d'utilisation et encombrants. Hors, certaines applications nécessitent une rapidité et une sûreté de manutention ainsi qu'une simplification d'utilisation des bras articulés. On peut citer comme exemple d'application le chargement et le déchargement d'un mortier d'un véhicule avec une manoeuvre la plus simple et la plus rapide possible.

Un but de l'invention est d'obtenir un bras articulé qui réponde à ces applications. Pour cela l'invention permet d'obtenir à la fois un mouvement de translation et de rotation à partir d'un seul auxiliaire moteur. A cet effet, l'invention a pour objet un dispositif à bras articulé comportant au moins :
- un bâti ;
- un auxiliaire moteur à course rectiligne relié au bâti par un axe de rotation ;
- une pièce se déplaçant en translation par rapport au bâti sur une course limitée ;
- et un bras relié à la pièce par un premier axe de rotation et relié à l'auxiliaire moteur par un deuxième axe de rotation ;
l'auxiliaire moteur entraînant le bras en translation par rapport au bâti, le bras entraînant lui-même la pièce en translation, le bâti comportant une protubérance sur lequel vient se soulever un élément solidaire mécaniquement du bras provoquant le désalignement du deuxième axe de rotation du bras par rapport à son premier axe de rotation, la poussée de l'auxiliaire moteur produisant alors un couple d'entraînement du bras en rotation.

Le bâti peut comporter une fente parallèle à la direction de translation, un ergot solidaire de la pièce en translation étant engagé dans la fente, la course de la pièce étant bloquée lorsque l'ergot atteint l'extrémité de la fente.

De préférence, le dispositif comporte un système verrouillant la position de la pièce lorsqu'elle atteint sa fin de course en translation. Ce système de verrouillage est par exemple un verrou à ressort de rappel pivotant autour d'un axe bloquant l'ergot. Le bras comporte par exemple une protubérance s'appuyant sur le verrou lorsque le bras se replie sur la pièce 4 par un mouvement de rotation inverse.

La protubérance sur le bâti est par exemple une rampe. L'élément solidaire mécaniquement du bras est par exemple un rouleau ou un galet venant rouler sur cette rampe.

Dans un mode de réalisation particulier, le bras comporte par exemple au moins deux branches reliées par au moins deux axes mécaniques dont l'un traverse la pièce pour former un axe de rotation par rapport à la pièce. L'autre axe mécanique entraîne l'élément se soulevant sur la protubérance.

La pièce en translation est par exemple un coulisseau se déplaçant dans un tube du bâti La protubérance est par exemple une pente réalisée sur le tube.

L'auxiliaire moteur est par exemple un vérin ou une vis sans fin.

L'invention a pour principaux avantages qu'elle permet d'obtenir un bras articulé simple à manipuler, rapide et sûr d'utilisation, peu encombrant et économique.

D'autres caractéristiques et avantages de l'invention apparaîtront à l'aide de la description qui suit faite en regard de dessins annexés qui représentent :
- la figure 1, par une vue en perspective un exemple de réalisation d'un dispositif selon l'invention avec son bras en position initiale ;
- la figure 2, le même dispositif dans le même état par une vue de côté ;
- la figure 3, une vue de côté selon un plan médian ;
- la figure 4, le dispositif précédent avec son bras en fin de mouvement de translation et début de mouvement de rotation ;
- la figure 5, le dispositif dans le même état par une vue de côté ;
- la figure 6, le dispositif avec son bras en phase de rotation ;
- la figure 7, le dispositif avec son bras en position ouverte.

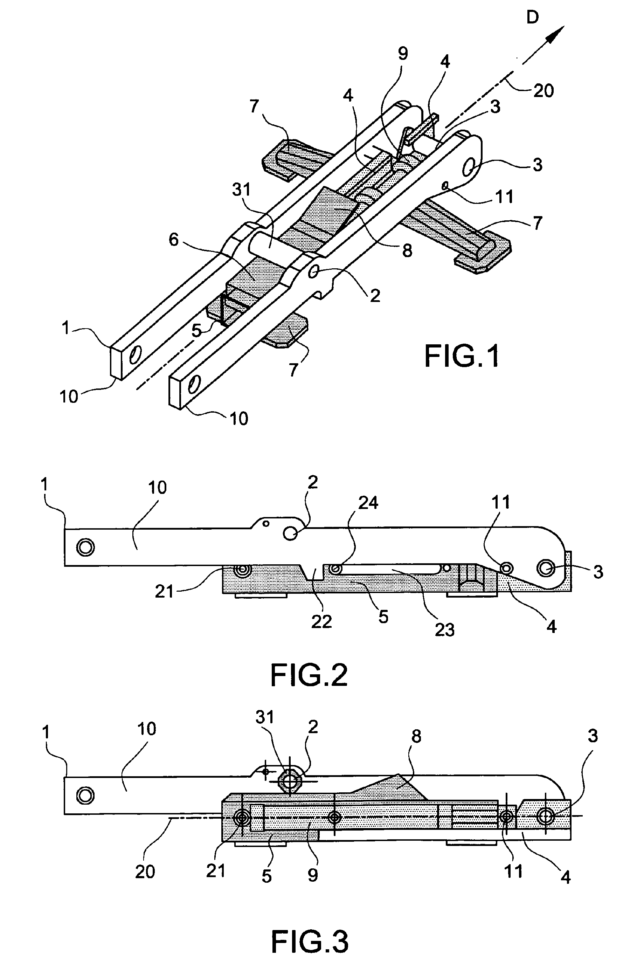

La figure 1 présente par une vue en perspective un exemple de réalisation possible dispositif selon l'invention. Le dispositif est représenté en position fermée ou initiale. Il comporte deux branches basculantes 10 reliées par au moins deux axes mécaniques 2, 3, l'ensemble formant une structure mécanique unique 1 appelée par la suite bras articulé. Le bras articulé 1 est relié mécaniquement à un coulisseau 4 avec un degré de liberté en rotation. La rotation se fait autour d'un premier axe mécanique 3 situé à l'avant du bras. L'avant du bras indique la direction D dans laquelle le bras se déplace en translation.
Le dispositif comporte un bâti 5. Le bâti comprend par exemple un tube 6 solidaire mécaniquement de pieds 7. Le bâti peut par exemple être posé ou fixé sur une structure à l'aide de ces pieds 7. Le bâti comporte une rampe 8, réalisée par exemple sur le tube 6. En position fermée l'axe mécanique 2 est situé en arrière de la rampe, relativement au sens de déplacement selon la direction D.
Le coulisseau 4 possède un degré de liberté en translation par rapport au bâti 5. Le coulisseau se déplace ainsi par exemple en translation dans le tube 6.
Le dispositif comporte un auxiliaire moteur 9, par exemple un vérin. Par la suite, pour l'exemple de réalisation de la figure 1, l'auxiliaire moteur est un vérin. Le bras articulé 1 possède un degré de liberté par rapport au vérin 9, autour d'un deuxième axe de rotation 11. Le bras 1 est donc relié au coulisseau par le premier axe de rotation 3 et relié au vérin par le deuxième axe de rotation 11. Pour former le premier axe de rotation, l'axe 3 reliant les deux branches 10 du bras traverse par exemple le coulisseau 4. De même, le deuxième axe mécanique 11 traverse par exemple le vérin 9. II forme alors un troisième axe mécanique reliant les deux branches. Le vérin possède lui-même un degré de liberté en rotation par rapport au bâti 5.

La figure 2 présente le dispositif de la figure 1 par une vue de côté, toujours en position fermée. La figure montre donc une branche 10 du bras articulé 1 et ses deux axes de rotation 3, 11. Le bras articulé est mobile en rotation par rapport au coulisseau 4 autour du premier axe 3 et mobile par rapport au vérin 9 autour du deuxième axe 11. Le vérin 9 est quant à lui mobile par rapport au bâti 5 autour d'un axe 21 situé à l'arrière du bâti La branche 10 du bras articulé comporte un taquet 22. Le taquet est par exemple réalisé dans la même pièce mécanique que la branche 10, formé par une protubérance de cette dernière. Une fente 23 est creusée dans le bâti pour laisser dépasser vers l'extérieur un ergot 24 solidaire mécaniquement du coulisseau 4. La fente 23 est creusée sur une distance limitée parallèle à la direction de déplacement du coulisseau. La fente 23 couplée à l'ergot 24 limite la course du coulisseau. D'autres moyens pourraient être prévus pour limiter cette course.

La figure 3 présente le même dispositif que celui des figures précédentes, dans la même position initiale, mais par une vue de côté dans le plan médian du dispositif pour mettre en évidence d'autres éléments du dispositif. En particulier, la figure montre le coulisseau 4 placé à l'intérieur du bâti 5, par exemple à l'intérieur du tube, ainsi que le vérin 9 placé à l'intérieur du coulisseau 4. Le vérin 9, solidaire du bras articulé 1 par l'axe de rotation 11, provoque par son déploiement le déplacement en translation du bras 1 par rapport au bâti 5. Ce mouvement de translation du bras entraîne à son tour le mouvement en translation du coulisseau 4 puisque ce dernier est solidaire du bras par l'axe de rotation 3.
Ces deux axes de rotations 3, 11, ainsi que l'axe de rotation 21 du vérin par rapport au bâti, sont alignés sur l'axe 20 du vérin, cet axe définissant la course du vérin. La figure 3 fait aussi apparaître trois axes solidaires du bras articulé. En plus des deux axes de rotation 3, 11, apparaît l'axe mécanique 2 situé derrière la rampe 8 du bâti Cet axe 2 est par exemple entouré d'un rouleau ou d'un galet 31. En plus de rendre solidaires les deux branches 10 du bras articulé, cet axe 2 rend solidaire du bras articulé le rouleau ou le galet qu'il entraîne. Ce rouleau ou ce galet 31 viendront rouler sur la pente par suite du mouvement de translation du bras 1 par rapport au bâti 5.
Durant la course du coulisseau dans le bâti, les trois axes de rotation 3, 11, 21 précités restent alignés tant que le rouleau 31 n'atteint pas la rampe 8 du bâti

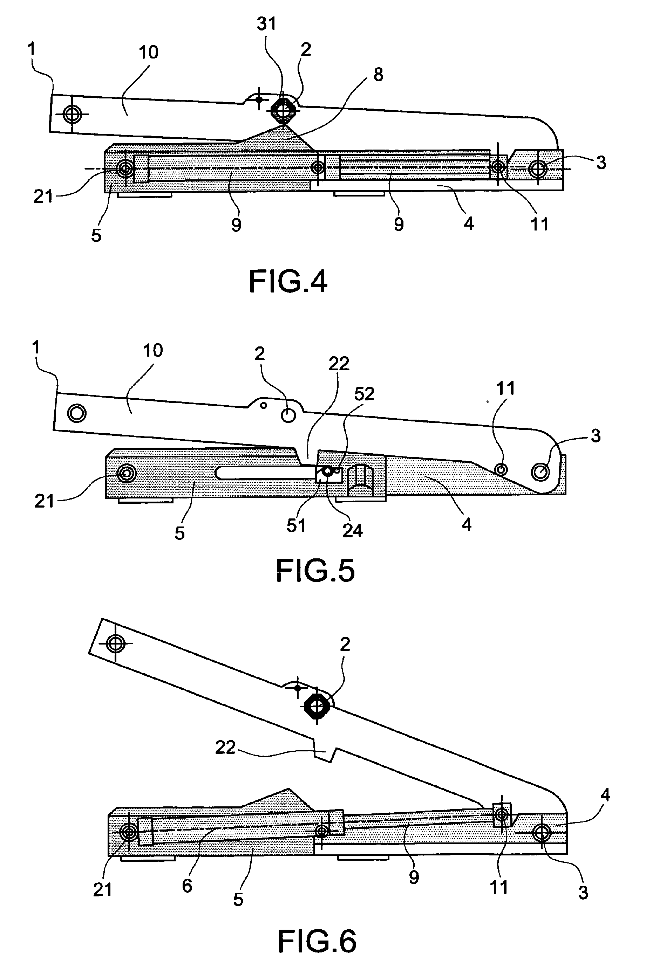

La figure 4 montre le dispositif, dans la même vue que la figure 3, mais au moment où le rouleau 31 solidaire du bras articulé 1 arrive au sommet de la pente 8 du bâti Les trois axes de rotation 3, 11, 21 ne sont plus alignés. En particulier l'axe de rotation 3 du bras articulé 1 par rapport au coulisseau 4 n'est plus aligné avec l'axe 20 du vérin et se situe alors en dessous de l'axe de rotation 11 du bras articulé par rapport à l'axe 20 du vérin 9.

La figure 5 montre le dispositif de la figure 4 au même instant par une vue de côté. L'ergot 24 solidaire du coulisseau 4 finit sa course en butée contre l'extrémité de la fente 23 réalisée dans le bâti de sorte que le coulisseau arrête son mouvement de translation. Un verrou 51 bloque par exemple la position de l'ergot par rapport au bâti pour empêcher le retour en arrière du coulisseau qui reste bloqué. Le bras articulé finit alors son mouvement de translation et engage son mouvement de rotation par rapport au coulisseau autour de l'axe 3. Le verrou 51 fait par exemple un mouvement de rotation par rapport à un axe 52 solidaire du bâti 5. Il possède une encoche pour accueillir l'ergo 24. Il est maintenu en position du blocage de l'ergot par un ressort de rappel. Lorsque l'ergot arrive à la rencontre du verrou sous l'effet du mouvement de translation du coulisseau, l'ergot impose au verrou un mouvement de rotation qui permet à l'ergot de continuer sa course jusqu'à ce qu'il atteigne l'encoche. Sous l'effet du ressort de rappel, le verrou revient alors à sa position initiale et bloque l'ergot et donc fige la position du coulisseau.

La figure 6 illustre le début de la rotation du bras articulé 1 par rapport au coulisseau. Le mouvement de rotation peut être engagé du fait que l'axe de rotation 11 du bras articulé par rapport au vérin 9 est alors au-dessus de l'axe de rotation 3 du bras par rapport au coulisseau. Sous la poussée du vérin qui continue sa course un couple est alors appliqué sur le bras articulé. La forte puissance du vérin compense le faible rayon d'application du couple.

Dans ce mouvement de rotation le vérin se soulève par un léger mouvement de rotation par rapport au bâti 5 autour de l'axe 21 situé à l'arrière de ce dernier. De son côté le bras articulé 1 continue son mouvement de rotation autour de l'axe 3 solidaire du coulisseau, combiné à un autre mouvement de rotation autour de l'axe 11 solidaire du vérin 9 en rotation.

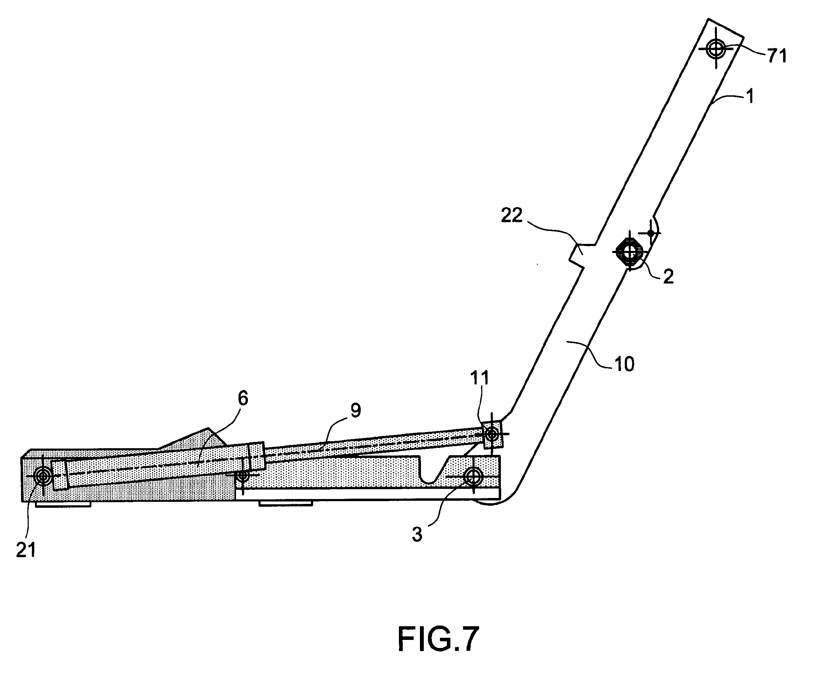

La figure 7 présente le bras articulé en fin de rotation, à l'état ouvert. Le bras articulé est maintenu en position ouverte par le vérin 9. Par suite de son mouvement de rotation autour de l'axe 21 solidaire du bâti 5, le vérin s'est soulevé. Des ouvertures son prévues dans le coulisseau et dans le bâti pour laisser un passage au vérin. Un objet peut être accroché au bras articulé, par exemple par l'intermédiaire d'un axe mécanique 71 qui placé à son extrémité. Il est par exemple ainsi possible de déplacer cet objet selon un mouvement de translation suivi d'un mouvement de rotation. C'est par exemple le cas pour décharger un mortier d'un véhicule militaire qui nécessite un mouvement de translation pour amener le mortier au bord de la plate-forme du véhicule puis qui nécessite ensuite un mouvement de rotation pour le poser au sol. Le chargement sur la plate-forme se fait par les mouvements inverses.
Pour fermer le bras articulé, c'est à dire pour le ramener en position initiale, le vérin est activé en sens inverse et se replie. Il entraîne alors le bras 1 dans des mouvements de rotation inverses à ceux précédemment décrits, autour des deux axes 3, 11. En continuant sa rotation, le bras se replie sur le coulisseau et sur le bâti jusqu'à ce que le taquet 22 s'appuie sur le verrou 51 pour libérer l'ergot, par exemple de l'encoche dans laquelle il était bloqué. Le coulisseau est ainsi libéré et peut engager son mouvement de translation en sens inverse vers sa position initiale.

Le vérin peut être remplacé par un autre auxiliaire moteur à course rectiligne réversible pourvu qu'il soit assez puissant pour entraîner le bras 1 en rotation. II peut par exemple être remplacé par une vis sans fin ou un dispositif à crémaillère. La source d'énergie peut être hydraulique ou électrique. Dans l'exemple de réalisation présenté par les figures le bras articulé comporte deux branches, il pourrait néanmoins en comporter une seule ou plus de deux. La pente 8 qui permet de désaligner les axes de rotation pourrait être remplacée par une simple bosse, ou par toute autre protubérance qui permet de soulever le bras articulé. Le coulisseau 4 peut être remplacé par une autre pièce capable de se déplacer en translation par rapport au bâti 5.

Un dispositif d'aide à la manutention selon l'invention apporte de nombreux avantages. Il permet d'obtenir un système de chargement ou de déchargement de matériels à l'aide d'un seul auxiliaire moteur réalisant une combinaison de plusieurs mouvements. Un tel système est peu coûteux et ne nécessite pas d'automate et d'installation motrice sophistiquée. Le système est simple à mettre en oeuvre, peu encombrant et de masse réduite. Il peut être installé et transporté sur des véhicules légers. Il est aussi facilement transportable par moyens aériens. Il ne requiert pas de personnel ayant une qualification technique particulière. Enfin il autorise un chargement et un déchargement rapide de matériel. II peut être utilisé pour l'aide à la manutention, mais plus généralement il peut être utilisé comme auxiliaire pour des opérations nécessitant un mouvement de translation et un mouvement de rotation.

## Revendications

1. Dispositif à bras articulé, comportant au moins :
- un bâti (5) ;
- un auxiliaire moteur à course rectiligne (9) relié au bâti par un axe de rotation (21) ;
**caractérisé en ce qu'**il comprend en outre :
- une pièce (4) se déplaçant en translation par rapport au bâti sur une course limitée ;
- et un bras (1) relié à la pièce par un premier axe de rotation (3) et relié à l'auxiliaire moteur par un deuxième axe de rotation (11) ;
l'auxiliaire moteur entraînant le bras (1) en translation par rapport au bâti (5), le bras (1) entraînant lui-même la pièce (4) en translation, le bâti comportant une protubérance (8) sur lequel vient se soulever un élément (31) solidaire mécaniquement du bras (1) provoquant le désalignement du deuxième axe de rotation (11) du bras par rapport à son premier axe de rotation (3), la poussée de l'auxiliaire moteur produisant alors un couple d'entraînement du bras en rotation.

2. Dispositif selon l'une quelconque des revendications précédentes, **caractérisé en ce que** le bâti comporte une fente (23) parallèle à la direction de translation, un ergot (24) solidaire de la pièce (4) en translation étant engagé dans la fente, la course de la pièce (4) étant bloquée lorsque l'ergot atteint l'extrémité de la fente.

3. Dispositif selon l'une quelconque des revendications précédentes, **caractérisé en ce qu'**il comporte un système (51, 52) verrouillant la position de la pièce (4) lorsqu'elle atteint sa fin de course en translation.

4. Dispositif selon les revendications 2 et 3, **caractérisé en ce que** le système de verrouillage est un verrou (51) à ressort de rappel pivotant autour d'un axe (52) bloquant l'ergot (24).

5. Dispositif selon la revendication 4, **caractérisé en ce que** le bras (1) comporte une protubérance (22) s'appuyant sur le verrou (51) lorsque le bras se replie sur la pièce (4) par un mouvement de rotation inverse.

6. Dispositif selon l'une quelconque des revendications précédentes, **caractérisé en ce que** la protubérance (8) est une rampe.

7. Dispositif selon l'une quelconque des revendications précédentes, **caractérisé en ce que** l'élément (31) solidaire mécaniquement du bras est un rouleau.

8. Dispositif selon l'une quelconque des revendications 1 à 6, **caractérisé en ce que** l'élément (31) solidaire mécaniquement du bras est un galet.

9. Dispositif selon l'une quelconque des revendications précédentes, **caractérisé en ce que** le bras (1) comporte au moins deux branches (10) reliées par au moins deux axes mécaniques (2, 3) dont l'un (3) traverse la pièce (4) pour former un axe de rotation par rapport à la pièce (4).

10. Dispositif selon la revendication 9, **caractérisé en ce que** l'autre axe mécanique (2) entraîne l'élément (31) se soulevant sur la protubérance (8).

11. Dispositif selon l'une quelconque des revendications précédentes, **caractérisé en ce que** la pièce (4) est un coulisseau se déplaçant dans un tube (6) du bâti

12. Dispositif selon la revendication 11, **caractérisé en ce que** la protubérance (8) est une pente réalisée sur le tube (6).

13. Dispositif selon l'une quelconque des revendications précédentes, **caractérisé en ce que** l'auxiliaire moteur (9) est un vérin.

14. Dispositif selon l'une quelconque des revendications précédentes, **caractérisé en ce que** l'auxiliaire moteur (9) est une vis sans fin.

15. Dispositif selon l'une quelconque des revendications 1 à 13, **caractérisé en ce que** l'auxiliaire moteur (9) est un dispositif à crémaillère.

16. Dispositif selon l'une quelconque des revendications précédentes, **caractérisé en ce qu'**il est utilisé pour l'aide à la manutention.

## Claims

1. Articulated arm device comprising at least:
- a frame (5);
- and a rectilinear-stroke auxiliary drive (9) connected to the frame by a hinge pin (21);
**characterized in that** it also comprises:
- a component (4) that moves translationally with respect to the frame along a limited stroke;
- and an arm (1) connected to the component by a first hinge pin (3) and connected to the auxiliary drive by a second hinge pin (11);
the auxiliary drive driving the arm (1) translationally with respect to the frame (5), the arm (1) itself driving the component (4) translationally, and the frame comprising a protuberance (8) on which an element (31) mechanically attached to the arm (1) rises, causing the second hinge pin (11) of the arm to move out of alignment with its first hinge pin (3), the thrust of the auxiliary drive producing a torque which causes the arm to rotate.

2. Device according to any one of the preceding claims, **characterized in that** the frame comprises a slot (23) parallel to the direction of translation, a stud (24) attached to the component (4) in translation being engaged in the slot, and the stroke of the component (4) being arrested when the stud reaches the end of the slot.

3. Device according to any one of the preceding claims, **characterized in that** it comprises a system (51, 52) that locks the position of the component (4) when it reaches the end of its translational stroke.

4. Device according to Claims 2 and 3, **characterized in that** the locking system is a lock (51) with a return spring pivoting about a pin (52) which arrests the stud (24).

5. Device according to Claim 4, **characterized in that** the arm (1) comprises a protuberance (22) that presses on the lock (51) when the arm is folded back onto the component (4) by a movement of reverse rotation.

6. Device according to any one of the preceding claims, **characterized in that** the protuberance (8) is a ramp.

7. Device according to any one of the preceding claims, **characterized in that** the element (31) mechanically attached to the arm is a roller.

8. Device according to any one of Claims 1 to 6, **characterized in that** the element (31) mechanically attached to the arm is a wheel.

9. Device according to any one of the preceding claims, **characterized in that** the arm (1) comprises at least two members (10) connected by at least two pins (2, 3), one (3) of which passes through the component (4) to form a hinge pin between it and the component (4).

10. Device according to Claim 9, **characterized in that** the other pin (2) drives the element (31) that rises over the protuberance (8).

11. Device according to any one of the preceding claims, **characterized in that** the component (4) is a slide that moves inside a tube (6) forming part of the frame.

12. Device according to Claim 11, **characterized in that** the protuberance (8) is a slope formed on the tube (6).

13. Device according to any one of the preceding claims, **characterized in that** the auxiliary drive (9) is a thrust cylinder.

14. Device according to any one of the preceding claims, **characterized in that** the auxiliary drive (9) is a worm.

15. Device according to any one of Claims 1 to 13, **characterized in that** the auxiliary drive (9) is a rack device.

16. Device according to any one of the preceding claims, **characterized in that** it is used as a handling aid.

## Patentansprüche

1. Vorrichtung mit Gelenkarm, die mindestens Folgendes aufweist:
- einen Aufbau (5);
- eine Antriebshilfe mit geradlinigem Hub (9), die mit dem Aufbau durch eine Rotationsachse (21) verbunden ist,
**dadurch gekennzeichnet, dass** sie ferner Folgendes aufweist:
- einen Teil (4), der sich translatorisch in Bezug auf den Aufbau über einen beschränkten Hub bewegt;
- einen Arm (1), der mit dem Teil durch eine erste Rotationsachse (3) und mit der Antriebshilfe durch eine zweite Rotationsachse (11) verbunden ist;
wobei die Antriebshilfe den Arm (1) translatorisch in Bezug zu dem Aufbau (5) antreibt, wobei der Arm (1) selbst den Teil (4) translatorisch antreibt, wobei der Aufbau einen Vorsprung (8) aufweist, auf dem sich ein Element (31), das mechanisch fest mit dem Arm (1) verbunden ist, anhebt, das die Fehlausrichtung der zweiten Rotationsachse (11) des Arms in Bezug auf seine erste Rotationsachse (3) verursacht, wobei der Schub der Antriebshilfe ein Antriebsmoment des Arms in Rotation erzeugt.

2. Vorrichtung nach einem der vorhergehenden Ansprüche, **dadurch gekennzeichnet, dass** der Aufbau einen Schlitz (23) parallel zu der Translationsrichtung aufweist, wobei ein Dorn (24), der fest mit dem Teil (4) in Translation verbunden ist, in den Schlitz eingefügt wird, wobei der Hub des Teils (4) blockiert wird, wenn der Dorn das Ende des Schlitzes erreicht.

3. Vorrichtung nach einem der vorhergehenden Ansprüche, **dadurch gekennzeichnet, dass** sie ein System (51, 52) aufweist, das die Position des Teils (4) verriegelt, wenn er sein Translationshubende erreicht.

4. Vorrichtung nach den Ansprüchen 2 und 3, **dadurch gekennzeichnet, dass** das Verriegelungssystem ein Riegel (51) mit Rückholfeder ist, der um die Achse (52), die den Dorn (24) blockiert, schwenkt.

5. Vorrichtung nach Anspruch 4, **dadurch gekennzeichnet, dass** der Arm (1) einen Vorsprung (22) aufweist, der sich auf den Riegel (51) legt, wenn sich der Arm auf den Teil (4) durch eine umgekehrte Rotationsbewegung zurücklegt.

6. Vorrichtung nach einem der vorhergehenden Ansprüche, **dadurch gekennzeichnet, dass** der Vorsprung (8) eine Rampe ist.

7. Vorrichtung nach einem der vorhergehenden Ansprüche, **dadurch gekennzeichnet, dass** das Element (31), das mit dem Arm mechanisch fest verbunden ist, ein Zylinder ist.

8. Vorrichtung nach einem der Ansprüche 1 bis 6, **dadurch gekennzeichnet, dass** das Element (31), das mit dem Arm mechanisch fest verbunden ist, eine Walze ist.

9. Vorrichtung nach einem der vorhergehenden Ansprüche, **dadurch gekennzeichnet, dass** der Arm (1) mindestens zwei Schenkel (10) aufweist, die durch mindestens zwei mechanische Achsen (2, 3) verbunden sind, von welchen eine (3) den Teil (4) durchquert, um in Bezug zu dem Teil (4) eine Rotationsachse zu bilden.

10. Vorrichtung nach Anspruch 9, **dadurch gekennzeichnet, dass** die andere mechanische Achse (2) das Element (31), das sich auf dem Vorsprung (8) anhebt, antreibt.

11. Vorrichtung nach einem der vorhergehenden Ansprüche, **dadurch gekennzeichnet, dass** der Teil (4) ein Stößel ist, der sich in einem Rohr (6) des Aufbaus bewegt.

12. Vorrichtung nach Anspruch 11, **dadurch gekennzeichnet, dass** der Vorsprung (8) eine Schräge ist, die auf dem Rohr (6) hergestellt ist.

13. Vorrichtung nach einem der vorhergehenden Ansprüche, **dadurch gekennzeichnet, dass** die Antriebshilfe (9) ein Zylinder ist.

14. Vorrichtung nach einem der vorhergehenden Ansprüche, **dadurch gekennzeichnet, dass** die Antriebshilfe (9) eine Schnecke ist.

15. Vorrichtung nach einem der Ansprüche 1 bis 13, **dadurch gekennzeichnet, dass** die Antriebshilfe (9) eine Vorrichtung mit Zahnstange ist.

16. Vorrichtung nach einem der vorhergehenden Ansprüche, **dadurch gekennzeichnet, dass** sie zum Helfen bei der Förderung verwendet wird.
